# EUROPEAN PATENT SPECIFICATION

(11) **EP 2 086 837 B1**
(45) Date of publication and mention of the grant of the patent: **26.12.2012**
(21) Application number: 07827146.7
(22) Date of filing: 24.09.2007
(51) Int. Cl.: B64F 1/22, G08G 5/06

(54) **SYSTEM AND METHOD FOR TRANSFERRING AIRPLANES**
SYSTEM UND VERFAHREN ZUM TRANSFER VON FLUGZEUGEN
SYSTÈME ET PROCÉDÉ DE TRANSFERT D'AVIONS

(30) Priority: 28.09.2006 US 528647; 16.05.2007 US 798777
(43) Date of publication of application: 12.08.2009
(60) Divisional application: 10177831.4
(73) Proprietor: Israel Aerospace Industries Ltd., 70100 Lod (IL)
(72) Inventor: PERRY, Arie, 45257 Hod Hasharon (IL); BRAIER, Ran, 73142 Shoham (IL)
(74) Representative: Becker Kurig Straus
(86) International application number: PCT/IL2007/001172
(87) International publication number: WO 2008/038270

(56) References cited:
- EP-A- 0 235 845
- EP-A- 1 634 808
- WO-A-2004/114252
- FR-A- 2 675 919
- US-A- 2 957 650
- US-A1- 2002 173 904
- US-B1- 6 305 484

## Description

### FIELD OF THE INVENTION

The present invention relates to systems and methods for transferring airplanes.

### BACKGROUND OF THE INVENTION

In modern airports the terminal is located relatively far from the runaways. Airplanes use their jet engines to travel from the terminal to a runaway (said operation is also known as taxi-out) and to travel from a runway to the terminal (said operation is also known as taxi-in).

These jet engines are very noisy, cause safety hazards, burn large quantities of fuel and cause to significant air pollution, the emission of large quantities of CO₂.

Taxi traffic delay is the largest of all aviation movements delay, the average taxi-out delay in minutes per flight is approximately twice the airborne delay. Although aircraft burn roughly 5 times faster when airborne, crew and equipment costs make the spend rate for taxiing aircraft about 2/3 that for airborne aircraft. Consequently, the cost of taxi-out delay exceeds that of airborne delay by about 1/3, totaling more than 1B$ annually. By automated tower controlled ground movement, one shall save significantly on taxi delays, which make significant annual cost. This shall add to the savings from fuel burned during taxi performed by towing tractors or robots.

Jet fuel is one of the two largest airlines operating expenses (the other being labor cost), constituting 25-30% of typical airline annual operation cost. Therefore, saving in fuel consumption is one of the major efforts for all airlines today. Jet fuel prices increased from less than 1$ /gal in 2001 to 2$ / gal in 2006 and is expected to reach 2.5 $/gal or higher by 2010, making the issue critical for the airline industry.

During taxi, typical aircraft fuel consumption is about 3200 .lbs per hour (9.0 gallon per minute). Typical taxi-out time today is 30 minutes and rising constantly with the increase of air traffic all over the world. On average, typically, taxi-out time is 3 times longer than taxi-in time. Thus, a minimum of 40 minutes of taxi-out plus taxi-in time burn 360 gallons of fuel on airport grounds per flight, and this number is growing.

Air pollution in airports evolved into a major and significant hazard, and it keeps evolving due to the increment in air traffic worldwide. Gas emission in a jet engine is around 8 Kg of CO₂ per gallon. In a typical 40 minutes taxi-out plus taxi-in time, an aircraft emits 2.9 ton of CO₂ a very critical issue.

By 2010, the forecast is of more than one billion (1B) air travels, or around fifteen million (15M) flights a year, only in the US, not relating to the worldwide air traffic. For every 100 gallon of fuel saved during taxiing per flight, it is about 3.0 B$ in fuel and 12 M ton in CO₂ emission, in the US.

A typical busy airport has more than 1000 departures a day or around 400,000 flights a year. Every 100 gallon of fuel saved per flight, transfers in 40M gallon fuel saved per year per airport, or 80M$ yearly savings in fuel expenditure per airport (2$/gal today), actual savings being much higher.

In order to reduce the usage of jet engines various airplane towing systems were provided. Some are illustrated in the following patents and patent applications, all being incorporated herein by reference: U.S patent 6305484 of Leblanc; U.S patent 5219033 of Pollner et al.; U.S patent 5314287 of Wichert; U.S patent 5860785 of Eberspacher; U.S patent 6283696 of Trummer et al.; U.S patent 6352130 of Klein et al.; U.S patent 6543790 of Johnson; U.S patent 6675920 of Diez et al.; U.S Patent application publication serial number 2006/0056949 of Eckert; U.S Patent application publication serial number 2003/095854 of Abela; U.S Patent application publication serial number 2005/196256 of Rodenkirch et al.; European patent 649787 of Michelson et al; PCT patent application publication serial number WO/04028903A1 of Maggiori; PCT patent application publication serial number WO04114252 of Gentile; U.S Patent application publication serial number US2002173904 of Dow; U.S. patent 2957650 of Horan et al.; European patent 235845 of Versteeg; European patent application 1634808 of Eckert; and France patent 2675919 of Pelegrin.

There is a need to provide an efficient method and system for transferring an airplane.

### SUMMARY OF THE PRESENT INVENTION

In accordance with certain aspects of the present invention, there is provided an unmanned airplane transfer system. The system includes a transfer module comprising at least one motor and adapted to transfer an airplane, and a controller being assembled with the transfer system and coupled to the transfer module. The controller is adapted i) to receive a transfer signal that is responsive of one or more commands provided via an airplane control component and ii) to control the transfer module in response to the transfer signal, wherein said commands are a priori capable of controlling the airplane and/or parts thereof.

In accordance with further aspects of the present invention, the transfer system may further comprise a landing gear holder, adapted to firmly grip a landing gear of the airplane. The landing gear holder is pivotally coupled to a structural element of the unmanned transfer system; wherein the control of the transfer module in response to the transfer signal is adapted to be responsive of steering induced movement of the landing gear holder resulting from at least one steering command provided via an airplane control component.

In accordance with further aspects of the present invention, the transfer system may further comprise one or more movable elements coupling the transfer module to the structural element. Further, the transfer system may comprise one or more shock absorbers, wherein the structural element is coupled to the transfer module via said shock absorbers connected to the movable elements.

In accordance with further aspects of the present invention, at least one command may be adapted for velocity control and/or speeding up the transfer system.

In accordance with further aspects of the present invention, the transfer system may comprise a sensor adapted to sense a steering control induced movement of a landing gear of the airplane and, in response, to provide the transfer signal to the controller.

In accordance with further aspects of the present invention, the controller may be adapted to receive skid steering control signals and velocity control signals and, in response, to control the transfer module, wherein the transfer system is adapted to maintain an alignment between the unmanned airplane transfer system and the airplane during rotational movements of the airplane.

In accordance with further aspects of the present invention, the transfer module may comprise multiple independently controlled wheels.

In accordance with further aspects of the present invention, the transfer system may further comprise an audio interface adapted to receive modulated signals representative of one or more commands provided via an airplane control component, and, in response, to provide the transfer signal to the controller.

In accordance with further aspects of the present invention, the transfer system may further comprise location sensors coupled to the controller, wherein the controller is further adapted to enable control of transferring the airplane module in response to a location of the system.

In accordance with other aspects of the present invention, there is provided a method of transferring an airplane. The method comprises:

a) receiving a transfer signal responsive of one or more commands provided via an airplane control component, and

b) in response to the transfer signal, transferring the airplane by an unmanned airplane transfer system that comprises at least one motor ,

wherein said commands are a priori capable of controlling the airplane and/or parts thereof.

In accordance with further aspects of the present invention, the transfer signal may be responsive of a steering induced movement of a landing gear holder, said movement resulting from at least one steering command provided via an airplane control component; wherein the landing gear holder firmly grips a landing gear of the airplane and is pivotally coupled to a structural element of an unmanned airplane transfer system

In accordance with further aspects of the present invention, the method may further comprise dumping energy resulting from a fast change in a velocity of the airplane.

In accordance with further aspects of the present invention, at least one command may be adapted for velocity control and/or speeding up the transfer system.

In accordance with further aspects of the present invention, the method may further comprise sensing the steering induced movement of the landing gear of the airplane and, in response, providing the transfer signal.

In accordance with further aspects of the present invention, the transfer signal may be responsive of the sensed steering induced movement and one or more velocity control commands, and transferring the airplane may provided by applying skid steering and maintaining an alignment between the unmanned airplane transfer system and the airplane during rotational movements of the airplane.

In accordance with further aspects of the present invention, the method may further comprise determining a location of the airplane, wherein the transferring of the airplane is responsive to the sensed location.

In accordance with further aspects of the present invention, the method may further comprise detecting an obstacle and providing an obstacle indication and/or altering a path of the transfer system.

### BRIEF DESCRIPTION OF THE DRAWINGS

The present invention will be understood and appreciated more fully from the following detailed description taken in conjunction with the drawings in which:

Figures 1 and 2 illustrate an airplane that is being transferred by an unmanned airplane transfer system, according to an embodiment of the invention;

Figure 3 illustrates an unmanned airplane transfer system, according to an embodiment of the invention;

Figure 4 illustrates an unmanned airplane transfer system, according to an embodiment of the invention;

Figure 5 illustrates a lower portion of a landing gear and multiple springs and plates;

Figures 6-9 illustrate unmanned airplane transfer systems, according to various embodiments of the invention;

Figure 10 illustrates a landing gear and an unmanned airplane transfer system, according to various embodiments of the invention;

Figure 11 and 12 illustrate multiple airplanes and multiple unmanned airplane transfer systems within an airport, according to an embodiment of the invention;

Figure 13 is a flow chart of a method for transferring an airplane, according to an embodiment of the invention;

Figure 14 illustrates a method for controlling multiple unmanned airplane transfer systems, according to an embodiment of the invention;

Figure 15 illustrates a method for transferring an airplane according to an embodiment of the invention;

Figures 16 and 17 illustrate an unmanned airplane transfer system, according to an embodiment of the invention;

Figure 18 illustrates a method for transferring an airplane according to an embodiment of the invention; and

Figure 19 illustrates a landing gear holder, according to an embodiment of the invention.

### DETAILED DESCRIPTION OF THE DRAWINGS

According to an embodiment of the invention an unmanned airplane transfer system is provided. The system is controlled by one or more airplane control component (such as a flight control stick, throttle, pedal, steering wheel) and the airplane is transferred in response to these steering commands. An airplane control component can affect the airborne or ground movement of the airplane, especially when the airplane can autonomously move.

Conveniently, a virtual or physical movement of one or more airplane transfer control components can be tracked, such as the flight control stick that is used to control the airborne velocity or the ground velocity of the airplane. It is noted that the tracking can be done by electro-optical components, by electrical components, by adding a tracking device on the control panel, within the control panel, in connection to one of the airplanes computers and the like

Conveniently, an unmanned airplane transfer system is provided. The system includes a transfer module adapted to transfer an airplane, and a controller, connected to the transfer module, adapted to receive a transfer signal responsive of a movement of an airplane control component and in response control the transfer module.

Conveniently, the system is adapted to sense a movement of the airplane control component.

Conveniently, the steering commands are sensed by a sensor adapted to sense control induced movements of the landing gear.

Pilot can control the ground movement of an airplane by using one or more airplane transfer control components. The control can involve sending steering commands (which dictate the direction of the airplane) and velocity related commands (that dictate the speed of the airplane).

Conveniently, airplane transfer is controlled in response to mechanical movements of an airplane or of its landing gear. Steering commands can be sensed by monitoring rotational movements of the landing gear about its axis. The system and method receive commands from the cockpit to alter the velocity of the airplane and in response can alter the velocity of the unmanned airplane transfer system.

Conveniently, the landing gear includes a safety pin that once is stuck in the landing gear allows the landing gear to be rotated by the unmanned airplane transfer system. This safety pin is removed once the plane is about to take off. The pin removal can be done during a last preflight check that is also known as last minute check, in a last minute check area. This last minute check area can also include means of applying fire extinguishing means and the like. It is noted that the pilot can initiate the jet engines prior to the last minute check area and while the safety pin is still stuck in the landing gear.

According to an embodiment of the invention the unmanned airplane transport system uses skid steering and conveniently also places the landing gear at the geometrical center of the unmanned airplane transfer system. Accordingly, the wheels of the unmanned airplane transport system are fixed, with no steering means, but their speed and optionally the direction of their rotation can be controlled such that the wheels on one side of the system can be rotated independently from the wheels of the other side of the system. Conveniently, the landing gear can be rotated along its axes by using the skid steering. Conveniently, the unmanned airplane transfer system is aligned with the landing gear during rotational movements of the landing gear.

Conveniently, a pilot can use the same steering control unit when being transferred by an unmanned airplane transfer system and when the plane autonomously moves on the ground by means of its jet engines as performed in regular taxi. According to another embodiment of the invention, the pilot can use the pilot flight control stick for steering and velocity change. According to another embodiment of the invention the same steering control unit is used for sending controls to the unmanned airplane transfer system and while the plane autonomously moves on the ground. In both of these alternative embodiments the commands can be sent to the unmanned airplane transfer system by wire, in a wireless manner and the like.

According to an embodiment of the invention the velocity of the unmanned airplane transfer system is controlled by the pilot. The control can be executed by using a dedicated control knob, handle, stick or device.

Conveniently, the unmanned airplane transfer system is fully automated. The unmanned airplane transfer system also can be manually controlled. Additionally or alternatively, the unmanned airplane transfer system can be remotely controlled. A central control system can control multiple unmanned airplane transfer systems. The central control system can optimize the taxi-in and taxi-out process of multiple airplanes.

The airplane transfer system is computer controlled and commanded from a central control system. The central control system can track the locations of multiple airplane transfer systems and provide visual indications to an operator. This visual and detailed presentation of the taxi-in and taxi-out process will replace the prior art vocal based method of controlling the taxi-in and taxi-out process.

Conveniently, the transfer process is fully controlled by the pilot of the airplane, and the unmanned airplane transfer system can transfer the airplane in a similar manner that the airplane was transferred at the absence of the system.

Conveniently, the pilot can use a combination of steering operations in order to send commands to the unmanned airplane transfer system.

According to another embodiment of the invention the taxi-in and taxi-out process can be fully automated and requires no pilot intervention. The fully automation includes controlling one or more unmanned airplane transfer systems by a central control system that wirelessly communicates with the multiple unmanned airplane transfer systems.

The central control system can increase the safety of traffic on the ground, of manned and unmanned vehicles that are positioned in the airport, and the like. The central control system can prevent conflicts among moving entities on airport grounds: pedestrian, manned vehicles, robotic vehicles and aircraft. The central control system can also control obstacle detection and avoidance operations, traffic control coordination with aircraft, other vehicles and personnel, etc.

According to another embodiment of the invention an unmanned airplane transfer system and/or the central control system can have collision avoidance capabilities. The central control system can prevent collisions by monitoring the distance between adjacent airplanes and keeping a certain predefined distance between airplanes. The unmanned airplane transfer system can prevent collisions by sensing the distance of the airplane from other objects. If an object is too close the unmanned airplane transfer system can provide an audio/visual indication and/or can alter the transfer of the airplane accordingly.

Conveniently, the unmanned airplane transfer system supports the nose landing gear. The unmanned airplane transfer system can apply any prior art method for supporting the nose landing gear. For example, it can have a sloped surface one which the one or more wheels of the landing gear can climb.

At least the rotations of the unmanned airplane transfer system are controlled by the regular steering system that is used by the pilot when the airplane moved on the ground without being connected to the unmanned airplane transfer system. In some airplanes the steering system includes a steering wheel as well as break pedals. In other airplanes the steering system includes a pair of pedals are used for controlling the rotation and speed of the airplane.

It is noted that various wheels can be used for steering, for transferring or a combination of both.

Conveniently, once the unmanned airplane transfer system supports the nose landing gear the airplane is transferred on its rear landing gears and the unmanned airplane transfer system. The airplane transferring system can utilize skid steering thus it can rotate along its axis with substantially zero turning radius.

Conveniently, controlling the unmanned airplane transfer system (ATS) in response to movements (real or virtual) of airplane control component does not require to add dedicated control panels or dedicated displays.

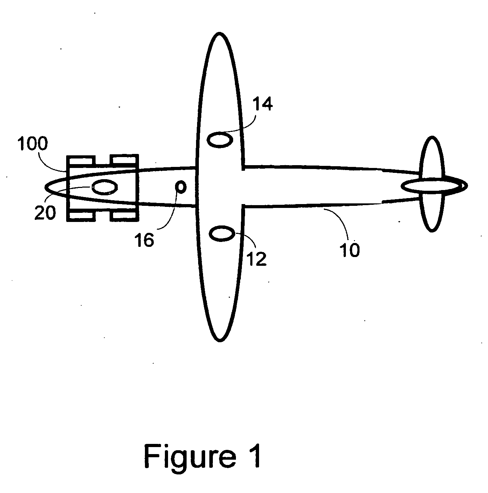

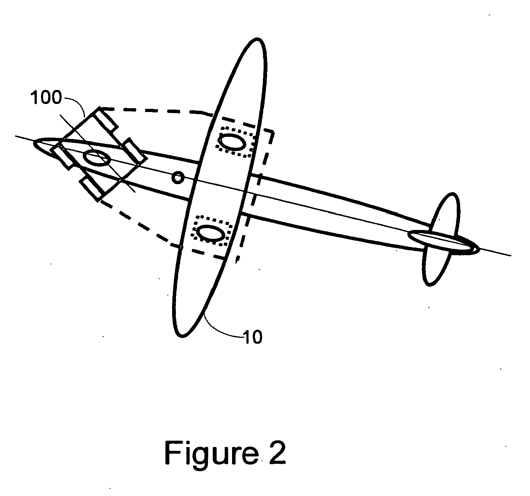

Figures 1 and 2 illustrate airplane 10 that is being transferred by unmanned airplane transfer system 100, according to an embodiment of the invention. In figure 1 the airplane longitudinal axis is parallel to the longitudinal axis of the unmanned airplane transfer system while in figure 2 these two axes are not parallel to each other, as the unmanned airplane transfer system 100 starts to turn to the right.

Figure 1 illustrates an airplane 10 that includes two rear landing gears 12 and 14 that are positioned below corresponding wings of airplane 10. Unmanned airplane transfer system 100 also includes a nose landing gear 20. The center of gravity 16 of airplane 10 is positioned between the three landing gears 12, 14 and 20.

Figure 2 illustrates an airplane 10 and an unmanned airplane transfer system 100 in turning mode. The dashed line illustrates a "virtual car" where the airplane rear landing gear wheels are the "vehicle" rear wheels, and the unmanned airplane transfer system 100 is the "vehicle" front wheel, steering, velocity change, breaking and power systems.

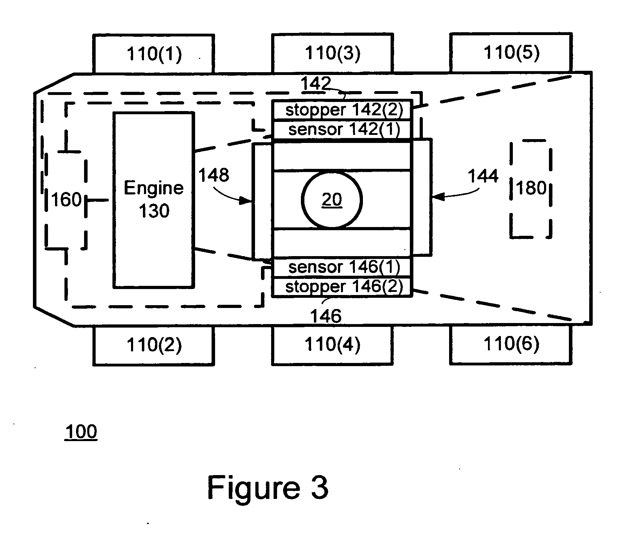

Figure 3 illustrates an unmanned airplane transfer system 100 according to an embodiment of the invention.

Unmanned airplane transfer system 100 includes six wheels 110(1)-110(6), engine 130, controller 160, and landing gear sensing and constraining units 142 and 146 and restrainers 144 and 148. The transfer module of unmanned airplane transfer system 100 includes wheels 110(1) - 110(6), the engine 130 and any mechanical transmissions used to rotate the wheels in any direction.

The landing gear sensing and constraining units 142 and 146 include sensors 142(1) and 146(1) that can sense rotational mechanical movements of the landing gear and also include restrainers 142-148 that prevent the landing gear 20 form moving beyond relatively slight movements.

These mechanical movements at least partially occur in response to steering commands from a pilot. Thus, if the pilot wants to turn the airplane to the right he can rotate the steering wheel to the right and the landing gear will rotate slightly to the right. Sensors 142(1) - 146(1) will sense this slight movement and indicate to controller 160 that the airplane should be turned to the right. Conveniently, changes in the velocity of the airplane are controlled by the pilot.

According to another embodiment of the invention system 100 also includes sensors for sensing change in the velocity of the airplane so that when the pilot hits the breaks at least the breaks of rear landing gear 12 and 14 operate to slow down the airplane. This slowing down can be sensed by an accelerometer or can be sensed by a sensor (not shown) that is positioned between the nose landing gear and the rear landing gears.

It is noted that unique combination of steering commands (for example sequences of rotations and/or pressing breaks) can represent transfer commands. For example a first steering command can indicate the need to speed up the towing process. The speeding up can continue for a predefined period or until another command is sensed by system 100. For example, if the pilot realizes that system 100 is about to cross a landing runway he can issue a speed up command (by performing a unique sequence of steering commands) to system 100 and in turn system 100 can speed up the transfer process.

It is noted that unmanned airplane transfer system 100 can use various prior art multi-direction steering technique and can include various types of wheels including fixed standard wheel, steered standard wheel, castor wheel, Stanford (Swedish) wheel and the like, smart wheel (developed by the Center for Self-Organizing and Intelligent systems at the Utah State University), and the like. It is further noted that the unmanned airplane transfer system 100 can also include one or more caterpillar tracks or a combination of one or more caterpillar tracks and one or more wheels. A combination of wheels and caterpillar tracks is illustrated in U.S patent application publication serial number 2006/0056949 of Eckert which is incorporated herein by reference.

Conveniently, at least two wheels out of wheels 110(1)- 110(6) can rotate independently from each other. According to another embodiment of the invention the rotation speed of one wheel can differ from a rotation speed of another wheel. Skid steering, for example, involves rotating wheels on one side of the unmanned airplane transfer system 100 at a speed that differs from the speed of the wheels at another side of the unmanned airplane transfer system 100.

It is further noted that the number of wheels can differ from six. For example, unmanned airplane transfer system 100 can include four wheels. The number of wheels is usually responsive to the weight of the airplane to be towed.

Conveniently, when the airplane is towed in a straight line, the transfer module rotates wheels 110(1) - 110(6) at a constant rate. Accordingly, the airplane is constantly pulled (towed) in a manner that resembles the slow and continuous movement of the airplane 10 when it is transferred by its idling jet engines.

It is further noted that although figure 1 illustrates a single motor 130 but this is not necessarily so. A motor can be allocated per wheel or per group of wheels. The motor (or motors) can be connected to the wheels in various manners. For example, the unmanned airplane transfer system can include at least one of the following: (i) diesel engine for providing hydraulic power that drives a hydraulic motor on the wheels via a valve assembly; (ii) diesel engine powering an electrical generator and a battery that drives electrical motors that rotate the wheels; (iii) a diesel engine that both powers an hydraulic pump and also powers an electric generator such as to drive a combination of hydraulic motors and electrical motors; (iv) an electrical motor adapted to receive electrical power from rails places on the surface of the airport; (v) fuel cells that drive electrical motors.

Conveniently, unmanned airplane transfer system 100 includes navigation unit 180 that enables unmanned airplane transfer system 100 to navigate at an airport. This navigation capability can be useful after unmanned airplane transfer system 100 finishes to taxi-out an airplane. Then it can navigate itself to another airplane or to waiting point from which it will navigate itself towards the next airplane to be towed. Navigation unit 180 can be connected to controller 160 or can be a part of controller 160. It should include at least one location sensor as well as a storage unit that stores information representative of the airport.

Navigation unit 180 allows to navigate the airplane transfer system in a fully automatic manner, in a semiautomatic manner (allows remote control when an unexpected event such as a presence of a obstacle occurs) or a fully remotely controlled manner. The remote control can be applied by a controller of a central control unit.

It is noted that the airplane can place its landing gear on unmanned airplane transfer system by placing the unmanned airplane transfer system at a certain location and while the unmanned airplane transfer system is still, the pilot navigates the nose landing gear on the unmanned airplane transfer system.

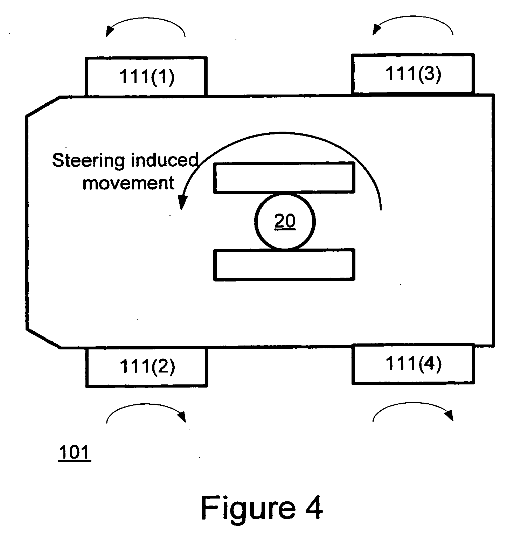

Figure 4 illustrates a rotation of a four-wheeled unmanned airplane transfer system 101 about its axis by rotating different wheels 111(1)- 111(4) in different directions, while the wheels are parallel to each other. The pilot requests to turn the plane to the left (counterclockwise) and in response the left side wheels 111(2) and 111(4) are rotated clockwise while the right side wheels 111(1) and 111(3) are rotated counterclockwise.

It is noted that each sensor out of sensors 142(1)-148 (1) can track the movements of a spring that is connected to a plate that interfaces with the landing gear. The springs, or alike, can be connected on their other side to a frame. The frame and at least one plate and spring can be elevated or lowered down when the landing gear climbs on the unmanned airplane transfer system.

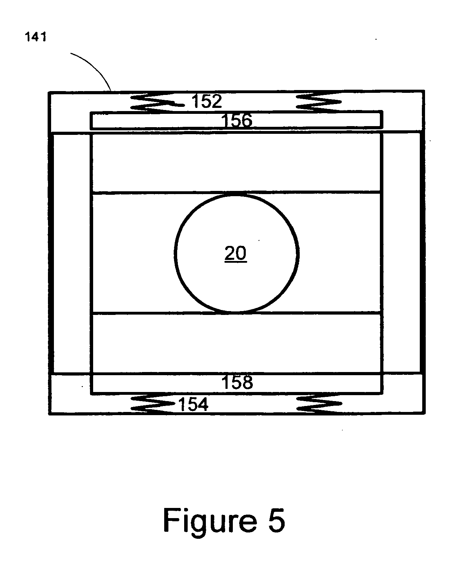

Figure 5 illustrates a lower portion of a landing gear 20 and multiple springs and plates, according to an embodiment of the invention..

Rigid frame 141 surrounds the springs and plates and prevents the landing gear 20 from moving beyond predetermined movements. Frame 141 can be lifted or raised during the placement of the landing gear on unmanned airplane transfer system 100. Frame 141 can also include detachable frame elements that can be moved towards each other when the unmanned airplane transfer system 100 tows airplane 10.

Sensors track the movement of springs, or alike (such as springs 152 and 154) that are connected to plates (such as plates 156 and 158) that interface with the landing gear.
Landing gear 20 is illustrated as including two wheels but the number of wheels supported by unmanned airplane transfer system can differ than two.
If, for example the pilot wishes to turn to the right the landing gear 20 will slightly rotate clockwise and at least some springs out of springs 152-154, or alike, will move accordingly.

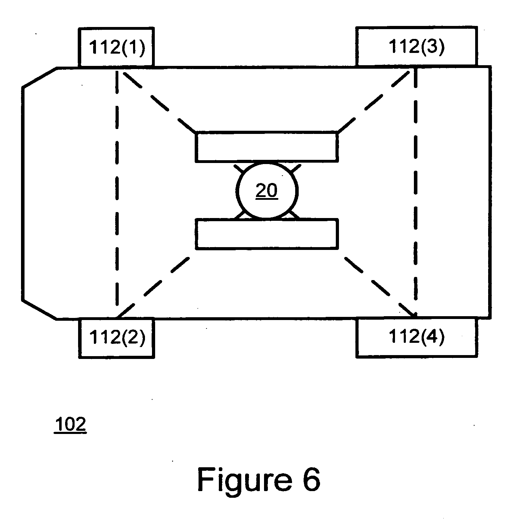

Figure 6 illustrates unmanned airplane transfer system 102, according to an embodiment of the invention.
Unmanned airplane transfer system 102 includes four wheels 112(0)-112(4). Rear wheels 112(3) and 112(4) define an imaginary rear axis while front wheels 112 (1) and 112(2) define an imaginary front axis. Landing gear 20 is positioned at the geometrical center of unmanned airplane transfer system 102, as defined by the front and rear axes and by an imaginary longitudinal symmetry axis that is parallel to the wheels.

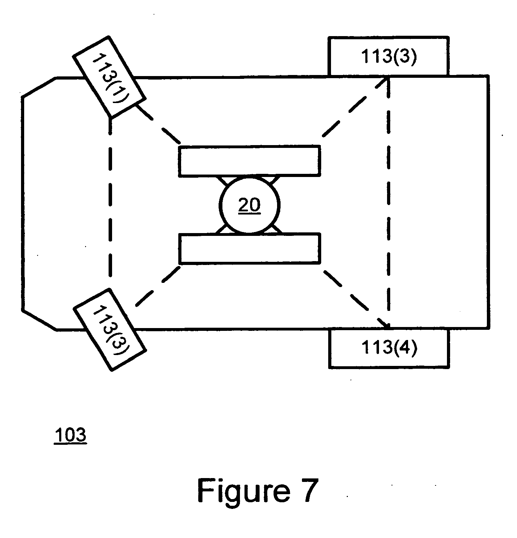

Figure 7 illustrates unmanned airplane transfer system 103, according to an embodiment of the invention.

Unmanned airplane transfer system 102 includes four wheels 113(1)-113(4). Rear wheels 113(3) and 113(4) are positioned in line with the wheels of landing gear 20. Front wheels 113(1) and 113(2) are castor wheels that can rotate along their axes. The front wheels can be used for steering while the rear wheels are used for towing, but this is not necessarily so.

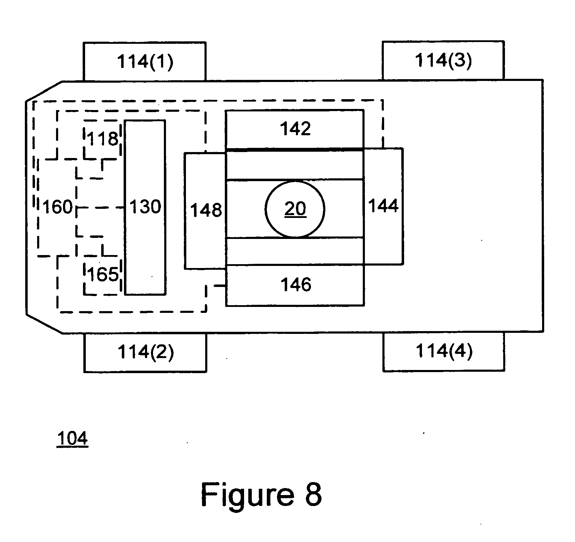

Figure 8 illustrates unmanned airplane transfer system 104, according to an embodiment of the invention.

Unmanned airplane transfer system 104 includes four wheels 114(1)-114(4), controller 160 and transceiver 165. The transceiver 165 is adapted to receive commands over a wireless medium. These commands are sent to controller 160 that in turn can control unmanned airplane transfer system 104 in response to these commands. It is noted that unmanned airplane transfer system 104 can operate in multiple modes-pilot controlled mode, remote control mode and a hybrid mode in which various commands can be provided in a remote manner while other commands are sensed by at least one landing gear sensing and constraining unit, and also manual (local) driving by and operator.

It is noted that the unmanned airplane transfer system can also controlled by a short-range remote control transmissions, by using a lap top computer and the like.

Conveniently, unmanned airplane transfer system 104 included optional position sensors such as but not limited to GPS based sensors that enable to determine the location of the system. The location of system 104 can affect the movements of the system. For example, if the system is about to cross a landing runway then system 104 can speed up the transfer process. The speeding up can include increasing the speed to a predefined speed and lowering the speed once the airplane passes the landing runway. The locations of the landing runways can be previously provided to system 104. According to another embodiment of the invention the velocity is only controlled by the pilot.

Conveniently, unmanned airplane transfer system 104 includes optional obstacle unit 118 adapted to detect and/or avoid obstacles.

Obstacle unit 118 can include one or more obstacle sensors such as a laser scanner, a radar, a camera, an acoustic sensor or a combination thereof. The obstacle sensor can scan the area in front of airplane 100 or especially in front of unmanned airplane transfer system 104 in order to detect obstacles. If an obstacle is detected the unmanned airplane transfer system 104 is stopped by the pilot, or it can alter the path of the towed airplane, provide an audio/visual indication (including activating a siren), sending an indication to a central control system and the like.

According to an embodiment of the invention once an obstacle is detected a central control system is informed and the airplane transfer system can acknowledge a change of path or request the pilot to select whether to change the path. The path change can be controlled by the pilot, by the central control system and optionally by the airplane transfer system.

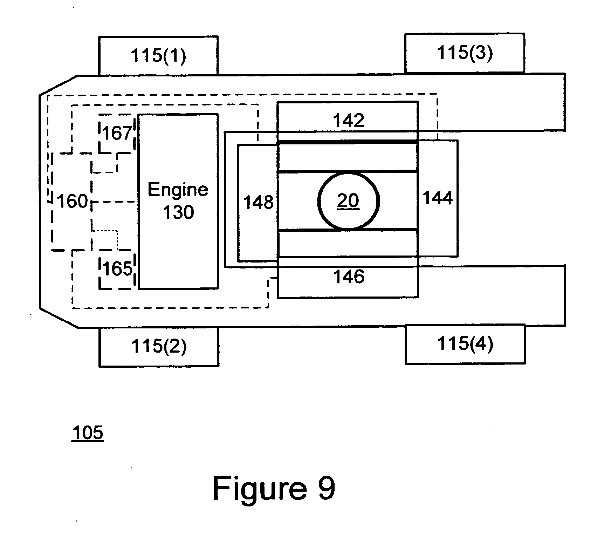

Figure 9 illustrates unmanned airplane transfer system 105, according to various embodiments of the invention.

Unmanned airplane transfer system 105 includes four wheels 115(1)-115(4), controller 160, transceiver 165 and a manual control interface 167. Manual control interface 167 can allow an operator to manually operate unmanned airplane transfer system 105. It can include a steering wheel, a pedal and the like.

It is noted that an unmanned airplane transfer system can include both a transceiver and a manual control interface and that such a system can operate in multiple different operational modes.

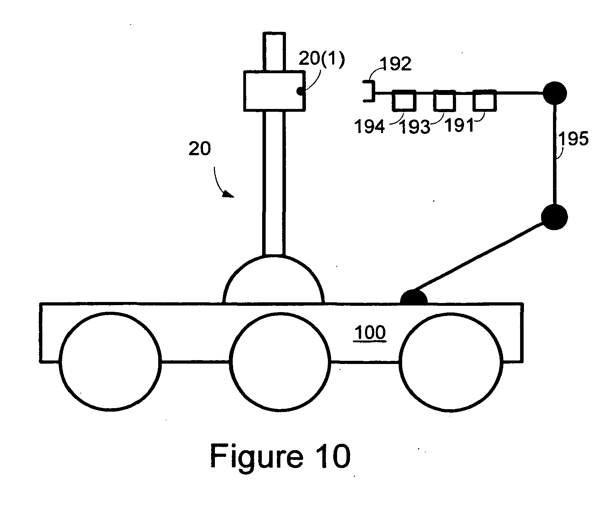

Figure 10 illustrates unmanned airplane transfer system 100 and a landing gear 20 according to an embodiment of the invention.

Unmanned airplane transfer system 100 is adapted to receive modulated signals representative of steering commands over an audio connection. These modulated signals are generated in response to pilot steering efforts as well as pilot control of the velocity of the airplane.

Conveniently, the audio link is used for conveying audio commands from the pilot. Unmanned airplane transfer system 105 can apply voice recognition techniques in order to recognize these audio commands. Once a command is recognized the unmanned airplane transfer system can operate according to the command.

It is noted that the reception of audio commands or of the modulated signals representative of steering commands can replace the sensing of mechanical movements but can also be applied in addition to the sensing of the mechanical movements of the landing gear.

According to yet another embodiment of the invention the connection to the audio plug can be done by an operator.

Typically such audio output interfaces are found in airplanes that were towed by manned towing vehicles.

It is noted that the connection to the audio output interface can be done automatically by using a camera and applying image recognition to guide an interface of the unmanned airplane transfer system towards the audio output interface of the landing gear.

Figure 10 illustrates camera 191, gripper 192, sliding audio plug 193, and sliding audio cover lifter 194 that are connected to a movable arm 195. Movable arm can lift the camera 191 to the height of the audio output interface 21 of landing gear 20, use enable sliding gripper 194 to hold landing gear 20, allow the sliding audio cover lifter to lift a cover that protects audio output interface 21 and then enable the sliding audio plug 193 to connect to audio output interface 21.

Conveniently, movable arm 195 can be used to remove the nose landing gear wheel safety pin, in accordance to the transferring system mode of operation and according to the towing phase.

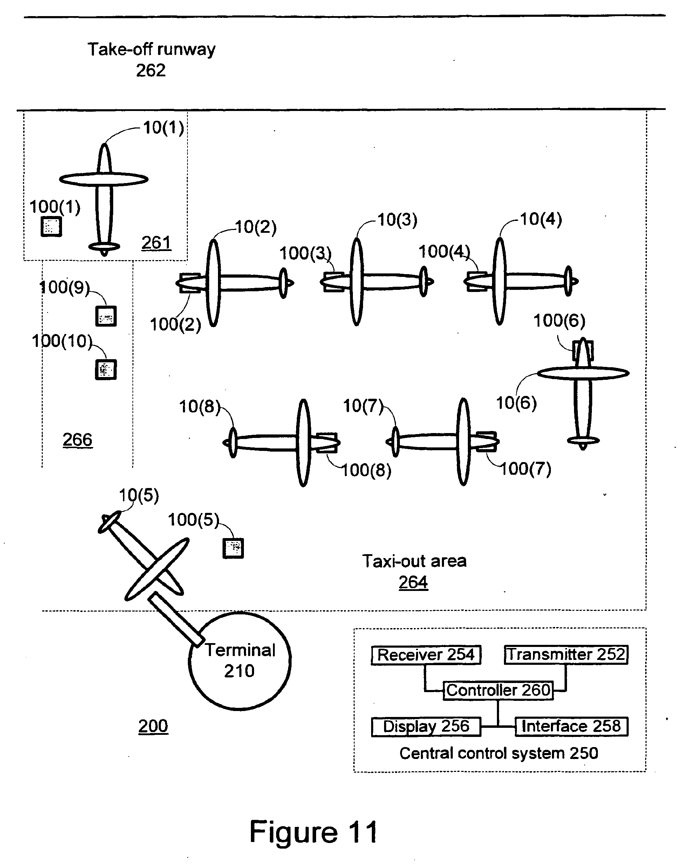

Figure 11 illustrates multiple airplanes 10(1) - 10(8) and multiple unmanned airplanes transfer systems 100(1) - 100(10) according to an embodiment of the invention.

The multiple airplanes 10(1) - 10(11) and multiple airplanes transfer systems 100(1) - 100(10) are located at airport 200.

Airport 200 includes terminal 210, take-off runway 262, check up area 261, unmanned airplane transfer system path 266 and taxi-out area 264.

Conveniently, a last minute check is performed at check-up area 261, by an operator that checks the airplane for leaks, can extinguish fire, can remove the safety pin that allows the landing gear to be rotated and the like. The airplane can ignite their jet engines at check up area 261 or before reaching that area. For Example, airplanes 10(2), 10(3) and even 10(4) can ignite their engines. An unmanned airplane transfer system can detach from the airplane before reaching check-up area 261.

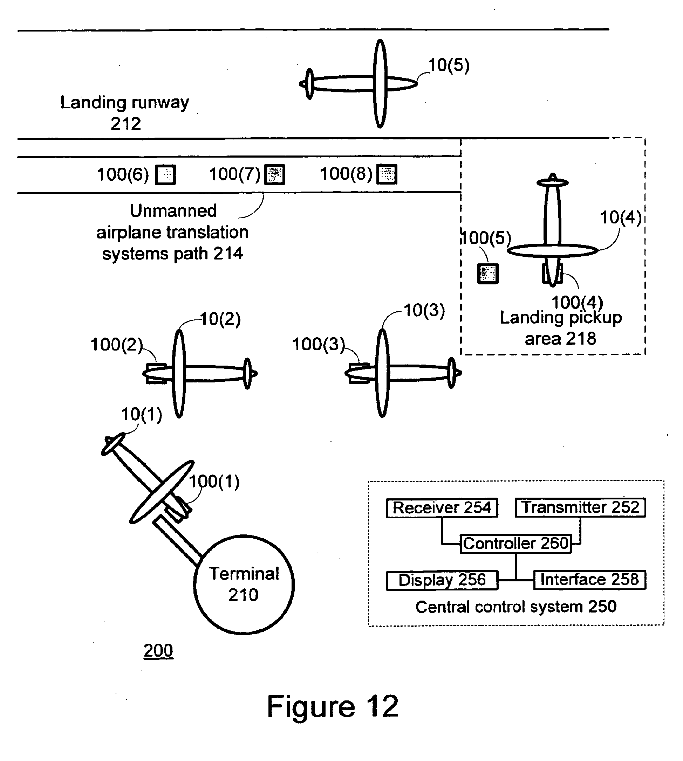

In addition, figure 12 illustrates a central control system 250 that is capable of communicating with airplanes transfer systems 100(1) - 100(10) and controlling their movements.

Airplane 10(1) is positioned at engine start and check up area 216 after being disconnected form the unmanned airplane transfer system that towed it from terminal 210. Unmanned airplane transfer systems such as systems 100(9), 100(10) and 100(1) that completed their task return to terminal 210, via unmanned airplane transfer system path 266.

Airplanes 10(2)-10(8) are being towed, at taxi-out area 268, by unmanned airplane transfer systems 100(2) - 100(8). Airplane 10(5) waits at terminal 210 to be towed by an unmanned airplane transfer system.

Conveniently, the airplane stops before the unmanned airplane transfer system detaches from it. After the towing ends the unmanned airplane transfer system can navigate towards the terminal. The navigation as well as the towing can be at least partially controlled by central control system 250, but this is not necessarily so.

According to an embodiment of the invention the central control system 250 is a C⁴ command and control system. It is operated by the Airport Taxi Supervisor /Ground Traffic Controller operator. Central control system 250 can control multiple airport transfer systems. It can override manually controlled unmanned airplane transfer systems, can override steering mechanism based upon sensing airplanes movements and the like. It can optimize the movements of unmanned airplane transfer systems, either during towing operation or during transfer between positions without airplanes. Central control system 250 can be integrated with the airport air traffic control system.

The central control system 250 can track the location of the various airplane transfer systems (by receiving location information from the airplane transfer systems, from the planes, from other location sensors), and displays to a controller the location of the various airplanes, airplane transfer system and thus greatly reduced human errors in the taxi-in and taxi-out process. Conveniently the central control system also received location information (either directly or via another control system) of various vehicles that are present in the airport and especially near runways and in the taxi-in and taxi-out areas and can provide to the controller an overall visual representation of the airport and the various entities in the airport. The central control system 250 can prevent aircraft taxi accidents, vehicle - aircraft accidents. It can prevent pilot or traffic controller errors and misunderstandings towards take-off, and the like.

Central control system 250 includes: (i) At least one transmitter (such as transmitter 252) adapted to transmit steering commands to multiple unmanned airplane transfer vehicles. (ii) At least one receiver (such as receiver 254) adapted to receive location information from the multiple unmanned airplane transfer vehicles. (iii) At least one display (such as display 256) for displaying locations of multiple airplanes and the multiple unmanned airplane transfer vehicles. (iv) At least one interface (such as interface 258) adapted to receive from an operator operational mode commands adapted to determine a control mode of at least one unmanned air plane transfer system. The interface can include keyboard, mouse, and the like that are connected to a computer that in turn controls display 256.

Conveniently, central control system 250 is adapted to receive an obstacle indication from an unmanned airplane transfer system and to selectively acknowledge a change in a path of the unmanned airplane transfer system.

Conveniently, central control system 250 is adapted to receive an obstacle indication from an unmanned airplane transfer system and to control a change of path of the unmanned airplane transfer system.

Conveniently, central control system 250 is adapted to receive a failure indication from an unmanned airplane transfer system and to selectively acknowledge a detachment of the unmanned airplane transfer system from the airplane.

Conveniently, central control system 250 is adapted to receive a failure indication from an unmanned airplane transfer system and to control a transfer of an airplane by the unmanned airplane transfer system.

Conveniently, central control system 250 is adapted to optimize a distance between multiple airplanes being towed by multiple unmanned transfer systems.

Conveniently, central control system 250 can control an unmanned airplane transfer system in a first operational mode in which central control system sends 250 steering commands that override steering commands that are mechanically sensed by the unmanned airplane transfer system.

Figure 12 illustrates multiple airplanes 10(1) - 10(5) and multiple airplanes transfer systems 100(1) - 100(8) according to an embodiment of the invention.

The multiple airplanes 10(1) - 10(5) and multiple airplanes transfer systems 100(1) - 100(8) are located at airport 200.

Airport 200 includes terminal 210, landing runway 212, landing pickup area 218 and unmanned airplane transfer system path 214. A central control system 250 is also located in airport 200. Airplane 10(5) is landing on landing runway 212. Airplane 10(4) has previously landed and is approached by unmanned airplane transfer system 100(5). Airplane 10(3) is towed by unmanned airplane transfer system 100(3) towards terminal 210. Airplane 10(2) is towed by unmanned airplane transfer system 100(2) towards terminal 210. Airplane 10(1) was towed by unmanned airplane transfer system 100 (1) and is hooked to terminal 210 at the gate.

Unmanned airplane transfer systems 100(6) - 100(8) propagate through unmanned airplane transfer system path 214, towards landing pickup area 218. Unmanned airplane transfer system 100(4) waits, at landing pickup area 218, to airplane 10(4).

Conveniently, the airplane stops before being towed, to enable the unmanned airplane transfer system to support its landing gear. After the towing ends at the engine start and check up area, the unmanned airplane transfer system can navigate towards the landing pickup area 218. This navigation can be controlled by a central control system, but this is not necessarily so.

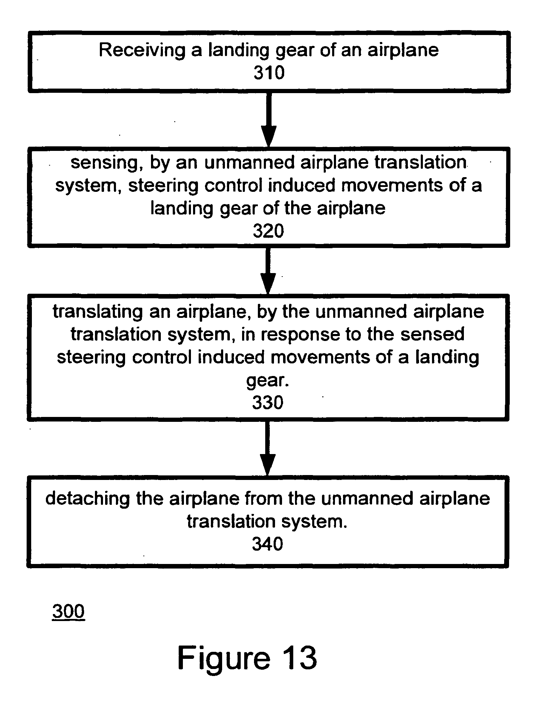

Figure 13 illustrates method 300 for transferring an airplane, according to an embodiment of the invention.

Method 300 starts by stage 310 of receiving a landing gear by an unmanned airplane transfer system.

Stage 310 is followed by stage 320 of sensing, by an unmanned airplane transfer system, steering control induced movements of a landing gear of the airplane. Referring to the example set fourth in figures 3 and 5 multiple sensors sense rotational mechanical movements of the mechanical gear such as rotation, de-acceleration and the like.

Stage 320 is followed by stage 330 of transferring an airplane, by the unmanned airplane transfer system, in response to the sensed steering control induced movements of a landing gear. Referring to the examples set fourth in figures 1-4 and 9, the airplane is towed by an unmanned airplane towing system in response to the sensed movements.

Stage 330 is followed by stage 340 of detaching the airplane from the unmanned airplane transfer system. Referring to the example set fourth in figures 11 and 12, once the taxi-in or taxi-out is completed the unmanned airplane transfer system can detach.

Conveniently, stage 320 of sensing includes sensing pilot commands to determine the airplane velocity whereas the transferring is responsive to the velocity change commands.

Conveniently, stage 330 of transferring is further responsive to remotely transmitted commands. Referring to the examples set fourth in figures 8,9 and 12 the unmanned airplane transfer system can include a transceiver for receiving commands and it can be remotely controlled by a central control system , although this is not necessarily so.

Conveniently, stage 330 of transferring includes independently controlling at least two independently controlled wheels. Referring to the example set fourth in figures 7 and 4, different wheels can rotate at different speeds, at different directions and can also be placed in positioned that are not parallel to each other.

Conveniently, method 300 also includes receiving audio commands or modulated signals representative of steering commands and wherein the transferring is responsive to the received audio commands. Referring to the example set fourth in figure 10, the unmanned airplane transfer system can receive audio commands from the landing gear, recognize the commands and act accordingly.

Conveniently, method 300 also includes determining a location of the airplane and wherein the transferring is responsive to the sensed location.

Conveniently, method 300 further includes detecting an unmanned airplane transfer system failure and in response detaching the airplane from the unmanned airplane transfer system.

It is noted that once a failure is detected the unmanned airplane transfer system can allow the central control system to take control. The central control system can select to detach the airplane transfer system, but this is not necessarily so. It is further noted that the detachment can be responsive to the type of failures. For example, failures that prevent the unmanned airplane transfer system to be controlled by the central control system may require a detachment without the interference of the control' system. Yet according to another embodiment of the invention the pilot can try to control the unmanned airplane transfer system, for example, by sending audio commands.

Conveniently, method 300 includes detecting an obstacle and stage 330 of transferring is responsive to a detected obstacle.

Conveniently, method 300 includes receiving commands from an operator and stage 330 of transferring is responsive to the received commands.

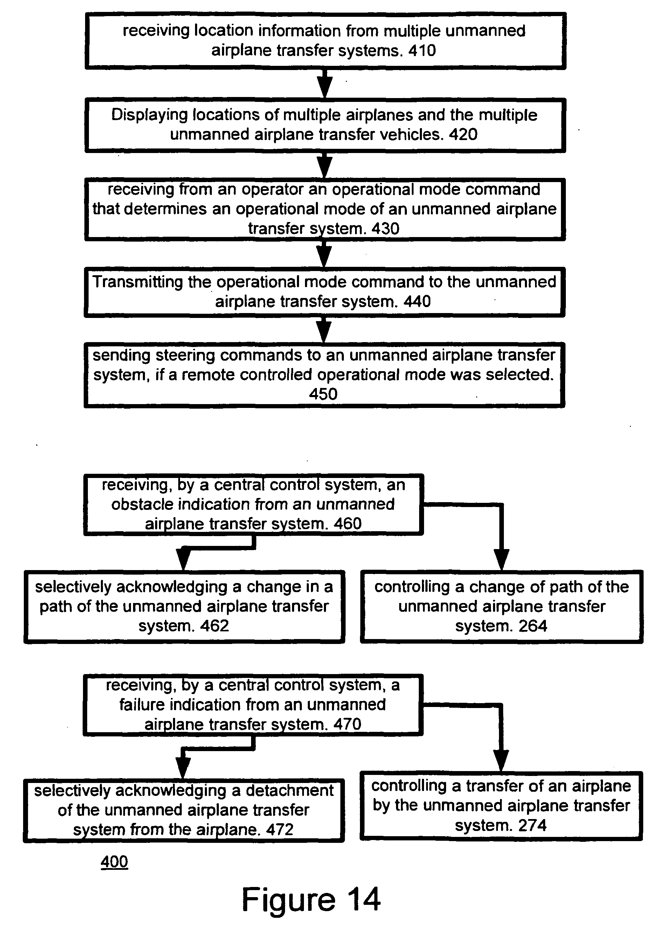

Figure 14 illustrates method 400 for controlling multiple unmanned airplane transfer systems, according to an embodiment of the invention.

Method 400 starts by stage 410 of receiving location information from multiple unmanned airplane transfer systems. Stages 410 is followed by stage 420 of displaying locations of multiple airplanes and the multiple unmanned airplane transfer vehicles.

Stage 420 is followed by stage 430 of receiving from an operator an operational mode command that determines an operational mode of an unmanned airplane transfer system.

Stage 430 is followed by stage 440 of transmitting the operational mode command to the unmanned airplane transfer system.

Stage 440 is followed by stage 450 of sending steering commands to an unmanned airplane transfer system, if a remote controlled operational mode was selected. The selection can be made by a central control system operator. Stage 450 includes sending steering commands that override steering commands that are mechanically sensed by the unmanned airplane transfer system.

Method 400 can also include stage 460 of receiving, by a central control system, an obstacle indication from an unmanned airplane transfer system. Stage 460 can be followed by stage 462 of selectively acknowledging a change in a path of the unmanned airplane transfer system. Stage 460 can. Alternatively or additionally, followed by stage 464 of controlling a change of path of the unmanned airplane transfer system.

Method 400 can also include stage 470 of receiving, by a central control system, a failure indication from an unmanned airplane transfer system. Stage 470 can be followed by stage 472 of selectively acknowledging a detachment of the unmanned airplane transfer system from the airplane. Stage 470 can also be followed by stage 474 of controlling a transfer of an airplane by the unmanned airplane transfer system.

Method 400 can also include stage 480 of optimizing a distance between multiple airplanes being towed by multiple unmanned transfer systems. This optimization can include positioning the airplanes close to each other but at a distance that will not dramatically increase the probability of collisions between airplanes.

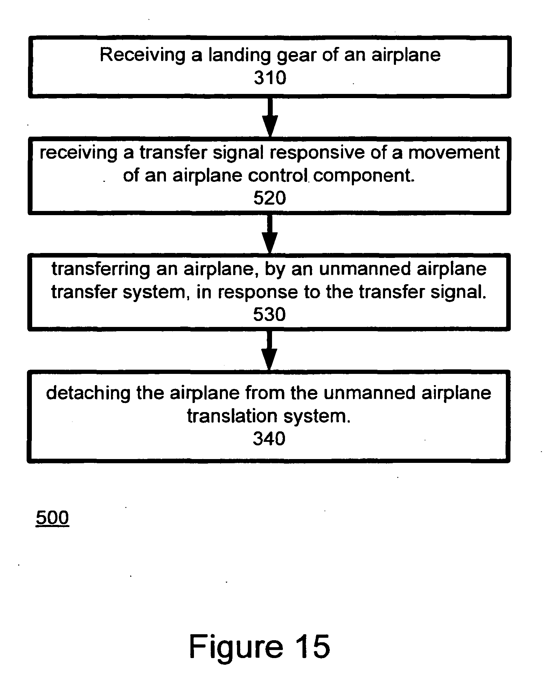

Figure 15 illustrates method 500 for transferring an airplane, according to an embodiment of the invention.

Method 500 starts by stage 310 of receiving a landing gear by an unmanned airplane transfer system.

Stage 310 is followed by stage 520 of receiving a transfer signal responsive of a movement of an airplane control component. Stage 520 can include stage 320 but can include, alternatively or additionally, receiving (over wire or in a wireless manner) a transfer signal from an airplane control component, tracking the movement of an airplane control component and the like.

Stage 520 is followed by stage 530 of transferring an airplane, by an unmanned airplane transfer system, in response to the transfer signal. Stage 530 can include stage 330 but this is not necessarily so.

Stage 530 is followed by stage 340 of detaching the airplane from the unmanned airplane transfer system.

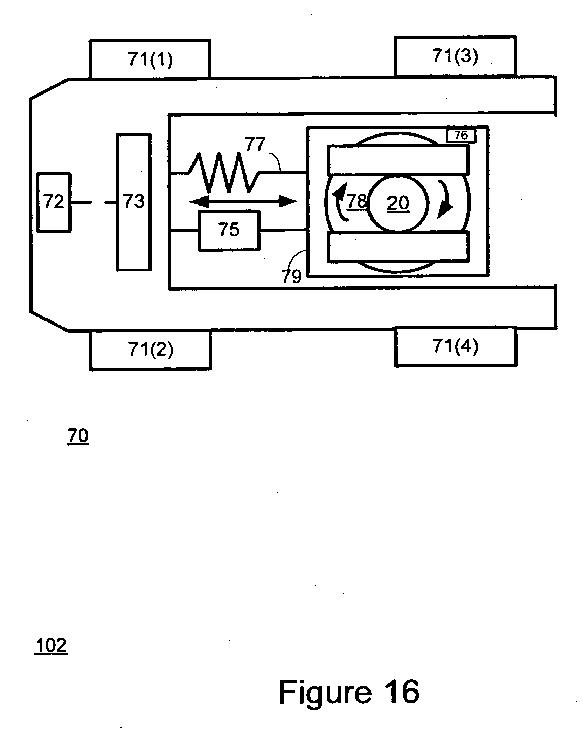

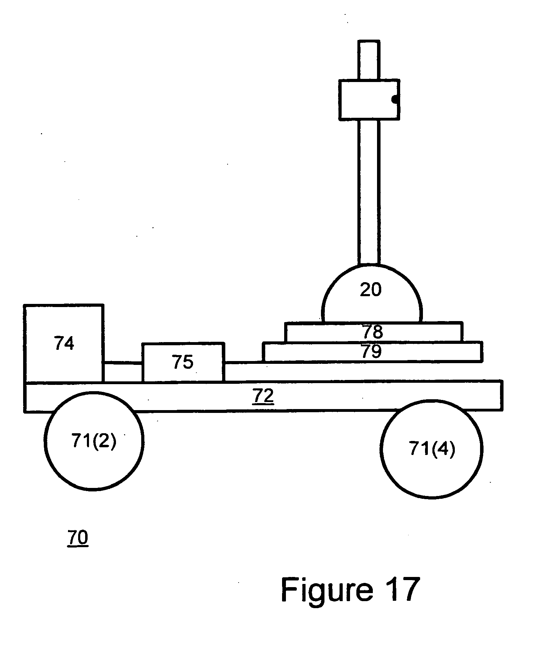

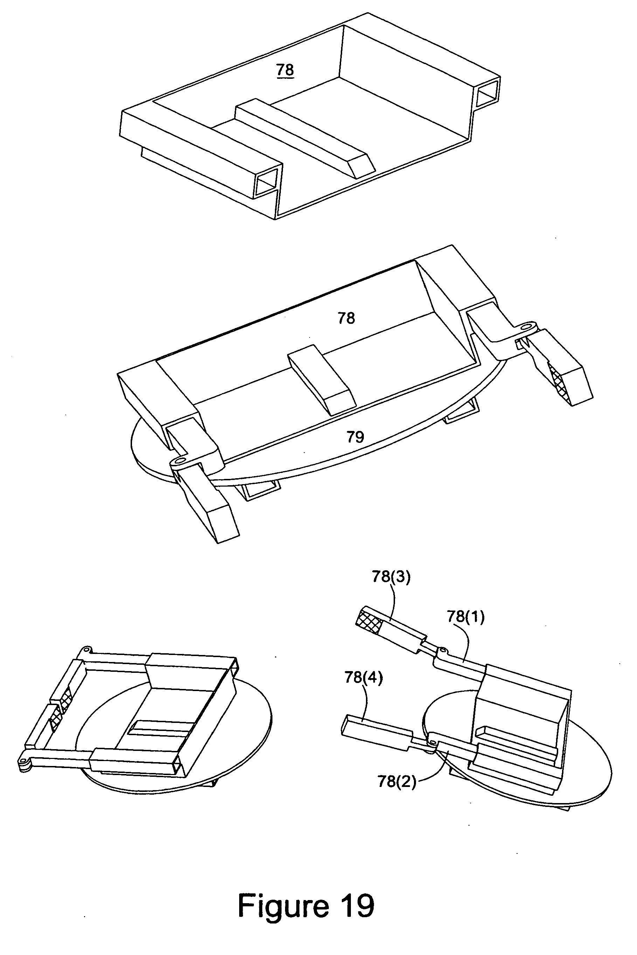

Figures 16 and 17 illustrate an unmanned airplane transfer system, according to an embodiment of the invention. Figure 19 illustrates a landing gear holder 78, according to an embodiment of the invention.

Figure 16 is a top view of system 70 while figure 17 is a side view of the system.

System 70 includes a transfer module adapted to transfer an airplane. The transfer module may include wheels (such as wheels 71(1)- 71(4)), one or more engines (such as engine 73), transmission mechanisms (not shown), controller 72, spring 75, shock absorber 77, landing gear holder 78, as well as one or more structural elements such as structural element 79, and sensor 76. It is noted that a structural element can be a chassis, a plate and the like.

Landing gear holder 78 is adapted to firmly grip landing gear 20 of an airplane. Landing gear holder 78 is pivotally connected (as illustrated by two curved arrows) to a structural element such as structural element 79. Controller 72 is connected to the transfer module and is adapted to control the transfer module in response to a steering induced movement of the landing gear holder.

Sensor 76 is adapted to sense the steering induced movements of the landing gear holder.

Conveniently, landing gear holder 78 is pivotally connected to structural element 79 that in turn is connected to another structural element of system 70, wherein the other structural element may be a part of the transfer module, but this is not necessarily so.

Conveniently, landing gear holder 78 includes a first pair of arms 78(1) and 78(2) that can move forwards or backwards, and well as two rods 78(3) and 78(4) that are pivotally connected to the end of arms 78(1) and 78(2) and rotate such as to virtually and close (or substantially close) a space defined between arms 78(1) and 78(2).

Conveniently, structural element 79 is connected to shock absorber 75 and spring 77 that absorb shocks and also tend to return the structural element to its per-shock condition.

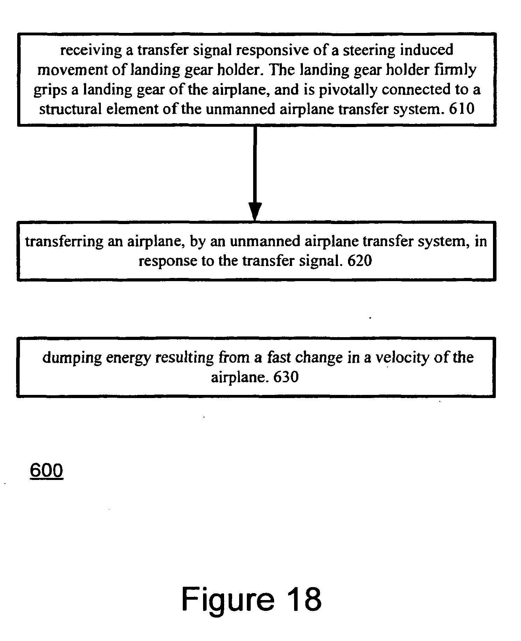

Figure 18 illustrates method 600 for transferring an airplane according to an embodiment of the invention.

Method 600 starts by stage 610 of receiving a transfer signal responsive of a steering induced movement of landing gear holder. The landing gear holder firmly grips a landing gear of the airplane, and is pivotally connected to a structural element of the unmanned airplane transfer system.

Stage 610 includes sensing the steering induced movement of the landing gear holder. It is noted that the steering induced movement of the landing gear holder is responsive to a steering induced movement of the landing gear. Because the landing gear holder firmly grips the landing gear but is pivotally connected to other parts of the airplane steering system then the landing gear holder can track rotational movements of the landing gear.

Stage 610 is followed by stage 620 of transferring an airplane, by an unmanned airplane transfer system, in response to the transfer signal.

Stage 600 also includes stage 630 dumping energy resulting from a fast change in a velocity of the airplane. This can be useful when the airplane stops, and until the unmanned airplane transfer system also stops.

According to an embodiment of the invention the status of the unmanned airplane transfer system can be reported to the pilot or to a central control system or both. Conveniently, the pilot can receive status indications while the airplane is being transferred to the unmanned airplane transfer system and the central control system can receive status indications when the unmanned airplane transfer system is not attached to the landing gear of the airplane.

Variations, modifications, and other implementations of what is described herein will occur to those of ordinary skill in the art without departing from the scope of the invention as claimed. Accordingly, the invention is to be defined not by the preceding illustrative description but instead by the scope of the following claims.

## Claims

1. An unmanned airplane transfer system (100, 101, 102, 103, 104), comprising:
a) a transfer module comprising at least one motor (73, 130) and adapted to transfer an airplane (10);
b) a controller (72, 160) being assembled with the transfer system, coupled to the transfer module and adapted i) to receive a transfer signal that is responsive of one or more commands provided via an airplane control component and ii) to control the transfer module in response to the transfer signal, wherein said commands are a priori capable of controlling the airplane and/or parts thereof.

2. The transfer system of Claim 1 further comprising a landing gear holder (78), adapted to firmly grip a landing gear (20) of the airplane (10), said landing gear holder pivotally coupled to a structural element (79) of the unmanned transfer system; wherein said control of the transfer module in response to the transfer signal is adapted to be responsive of steering induced movement of the landing gear holder resulting from at least one steering command provided via an airplane control component.

3. The transfer system of Claim 2 further comprising one or more movable elements coupling the transfer module to the structural element (79).

4. The transfer system of Claim 3 further comprising one or more shock absorbers (77), wherein the structural element (79) is coupled to the transfer module via said shock absorbers connected to the movable elements.

5. The transfer system of any one of Claims 1 - 4 wherein at least one command is adapted for velocity control and/or speeding up the transfer system.

6. The transfer system of any one of Claims 1 - 5 further comprising a sensor (76) adapted to sense a steering control induced movement of a landing gear (20) of the airplane and, in response, to provide the transfer signal to the controller (72).

7. The transfer system of Claim 6 wherein the controller (72) is adapted to receive skid steering control signals and velocity control signals and, in response, to control the transfer module, wherein the transfer system is adapted to maintain an alignment between the unmanned airplane transfer system (100) and the airplane (10) during rotational movements of the airplane.

8. The transfer system of any one of Claims 1 - 7 wherein the transfer module comprises multiple independently controlled wheels (71, 110, 11, 112, 113, 114).

9. The transfer system of any one of Claims 1 - 8 further comprising an audio interface adapted to receive modulated signals representative of one or more commands provided via an airplane control component, and, in response, to provide the transfer signal to the controller.

10. The transfer system of any one of Claims I - 9 further comprising location sensors coupled to the controller, wherein the controller is further adapted to enable control of transferring the airplane in response to a location of the system.

11. A method for transferring an airplane, the method comprises:
a) receiving a transfer signal responsive of one or more commands provided via an airplane control component, and
b) in response to the transfer signal, transferring the airplane by an unmanned airplane transfer system that comprises at least one motor,
wherein said commands are a priori capable of controlling the airplane and/or parts thereof.

12. The method of Claim 11 wherein the transfer signal is responsive of a steering induced movement of a landing gear holder, said movement resulting from at least one steering command provided via an airplane control component; wherein the landing gear holder firmly grips a landing gear of the airplane, and is pivotally coupled to a structural element of an unmanned airplane transfer system.

13. The method of Claims 11 or 12 further comprising dumping energy resulting from a fast change in a velocity of the airplane.

14. The method of any one of Claims 11 - 13 wherein at least one command is adapted for velocity control and/or speeding up the transfer system.

15. The method of any one of Claims 11 - 14 further comprising sensing the steering induced movement of the landing gear of the airplane and, in response, providing the transfer signal.

16. The method of Claim 15 wherein the transfer signal is responsive of the sensed steering induced movement and one or more velocity control commands, and transferring the airplane is provided by applying skid steering and maintaining an alignment between the unmanned airplane transfer system and the airplane during rotational movements of the airplane.

17. The method of any one of Claims 11 - 16 further comprising determining a location of the airplane, wherein the transferring of the airplane is responsive to the sensed location.

18. The method of any one of Claims 11 - 17 further comprising detecting an obstacle and providing an obstacle indication and/or altering a path of the transfer system.

## Patentansprüche

1. Unbemanntes Flugzeug-Verbringungssystem (100, 101, 102, 103, 104), umfassend:
a) ein Verbringungsmodul, das mindestens einen Motor (73, 130) umfasst und angepasst ist, ein Flugzeug (10) zu verbringen;
b) eine Steuerung (72, 160), die mit dem Verbringungssystem zusammengebaut ist, die mit dem Verbringungsmodul gekoppelt und angepasst ist
i) ein Verbringungssignal zu empfangen, das auf einen oder auf mehrere Befehle anspricht, die über eine Flugzeugsteuerkomponente bereitgestellt werden, und
ii) das Verbringungsmodul in Reaktion auf das Verbringungssignal zu steuern, wobei die Befehle a priori in der Lage sind, das Flugzeug und/oder Teile davon zu steuern.

2. Verbringungssystem gemäß Anspruch 1, weiter umfassend einen Fahrwerkshalter (78), der angepasst ist, ein Fahrwerk (20) des Flugzeuges (10) fest zu greifen, wobei der Fahrwerkshalter schwenkbar mit einem Strukturelement (79) des unbemannten Verbringungssystems gekoppelt ist;
wobei die Steuerung des Verbringungsmoduls in Reaktion auf das Verbringungssignal angepasst ist, auf eine durch ein Steuern hervorgerufene Bewegung des Fahrwerkshalters anzusprechen, die aus mindestens einem Steuerbefehl resultiert, der über eine Flugzeugsteuerungskomponente bereitgestellt wird.

3. Verbringungssystem gemäß Anspruch 2, weiter umfassend eines oder mehrere bewegliche Elemente, die das Verbringungsmodul mit dem Strukturelement (79) koppeln.

4. Verbringungssystem gemäß Anspruch 3, weiter umfassend einen oder mehrere Stoßdämpfer (77), wobei das Strukturelement (79) mit dem Verbringungsmodul über die Stoßdämpfer gekoppelt ist, die mit den beweglichen Elementen verbunden sind.

5. Verbringungssystem gemäß einem der Ansprüche 1 - 4, wobei mindestens ein Befehl zur Geschwindigkeitssteuerung und/oder zum Beschleunigen des Verbringungssystems angepasst ist.

6. Verbringungssystem gemäß einem der Ansprüche 1 - 5, weiter umfassend einen Sensor (76), der angepasst ist, um Bewegungen eines Fahrwerks (20) des Flugzeuges zu erfassen, die durch Lenkungssteuerung verursacht werden, und um in Reaktion darauf der Steuerung (72) das Verbringungssignal bereitzustellen.

7. Verbringungssystem gemäß Anspruch 6, wobei die Steuerung (72) angepasst ist, Antriebslenkungs-Steuerungssignale und Geschwindigkeits-Steuerungssignale zu empfangen und in Reaktion darauf das Verbringungsmodul zu steuern, wobei das Verbringungssystem angepasst ist, eine Ausrichtung zwischen dem unbemannten Flugzeug-Verbringungssystem (100) und dem Flugzeug (10) während Drehbewegungen des Flugzeugs aufrecht zu erhalten.

8. Verbringungssystem gemäß einem der Ansprüche 1 - 7, wobei das Verbringungsmodul mehrere unabhängig gesteuerte Räder (71, 110, 11, 112, 113, 114) umfasst.

9. Verbringungssystem gemäß einem der Ansprüche 1 - 8, weiter umfassend eine Audio-Schnittstelle, die angepasst ist, modulierte Signale zu empfangen, die einen oder mehrere Befehle darstellen, bereitgestellt über eine Flugzeugsteuerkomponente, und um in Rektion darauf das Verbringungssignal der Steuerung bereitzustellen.

10. Verbringungssystem gemäß einem der Ansprüche 1 - 9, weiter umfassend Orts-Sensoren, die an die Steuerung gekoppelt sind, wobei die Steuerung weiter angepasst ist, eine Steuerung der Verbringung des Flugzeugs in Reaktion auf einen Ort des Systems zu ermöglichen.

11. Verfahren zum Verbringen eines Flugzeugs (10), wobei das Verfahren umfasst:
a) Empfangen eines Verbringungssignals, das auf einen oder mehrere Befehle anspricht, bereitgestellt über eine Flugzeugsteuerungskomponente; und
b) Verbringen des Flugzeuges in Reaktion auf das Verbringungssignal, durch ein unbemanntes Flugzeug-Verbringungssystem, das mindestens einen Motor umfasst;
wobei die Befehle a priori in der Lage sind, das Flugzeug und/oder Teile davon zu steuern.

12. Verfahren gemäß Anspruch 11, wobei das Verbringungssignal auf eine durch ein Steuern hervorgerufene Bewegung eines Fahrwerkshalters anspricht, wobei die Bewegung aus mindestens einem Steuerbefehl resultiert, der über eine Flugzeugsteuerungskomponente bereitgestellt wird;
wobei der Fahrwerkshalter ein Fahrwerk des Flugzeugs fest greift und schwenkbar mit einem Strukturelement eines unbemannten Flugzeug-Verbringungssystems gekoppelt ist.

13. Verfahren gemäß Anspruch 11 oder 12, weiter umfassend Beseitigen von Energie, die aus einer schnellen Änderung einer Geschwindigkeit des Flugzeuges resultiert.

14. Verfahren gemäß einem der Ansprüche 11 bis 13, wobei mindestens ein Befehl zur Geschwindigkeitssteuerung und/oder zum Beschleunigen des Flugzeug-Verbringungssystems angepasst ist.

15. Verfahren gemäß einem der Ansprüche 11 bis 14, weiter umfassend Erfassen der durch das Steuern hervorgerufenen Bewegung des Fahrwerks des Flugzeuges; und
Bereitstellen des Verbringungssignals in Reaktion darauf.

16. Verfahren gemäß Anspruch 15, wobei das Verbringungssignal auf die durch das Steuern hervorgerufenen Bewegung und einen oder mehrere Geschwindigkeits-Steuerungsbefehle anspricht; und
wobei das Verbringen des Flugzeuges durch Anwenden von Antriebssteuerung und durch Aufrechterhalten einer Ausrichtung zwischen dem unbemannten Flugzeug-Verbringungssystem und dem Flugzeug während Drehbewegungen des Flugzeuges ausgeführt wird.

17. Verfahren gemäß einem der Ansprüche 11 bis 16, weiter umfassend Bestimmen eines Orts des Flugzeuges, wobei das Verbringen des Flugzeuges in Reaktion auf den erfassten Ort ausgeführt wird.

18. Verfahren gemäß einem der Ansprüche 11 bis 17, weiter umfassend Erkennen eines Hindernisses und Bereitstellen einer Hindernisangabe und/oder Verändern eines Wegs des Verbringungssystems.

## Revendications

1. Système de transfert d'avions non habité (100, 101, 102, 103, 104), comprenant:
a) un module de transfert comprenant au moins un moteur (73, 130) et adapté pour transférer un avion (10)
b) une commande (72, 160) assemblée avec le système de transfert, couplée au module de transfert et adaptée i) pour recevoir un signal de transfert qui répond à une ou plusieurs commandes fournie(s) via un composant de contrôle d'avion et ii) pour commander le module de transfert en réponse au signal de transfert, dans lequel les commandes sont à priori capables de contrôler l'avion et/ou des parties de celui-ci.

2. Système de transfert selon la revendication 1, comprenant en outre un support de train d'atterrissage (78) adapté pour mettre fermement en prise un train d'atterrissage (20) de l'avion (10), le support de train d'atterrissage étant couplé, de manière à pouvoir pivoter, à un élément structurel (79) du système de transfert non habité ; sachant que la commande du module de transfert en réponse au signal de transfert est adaptée pour répondre au mouvement induit de direction du support de train d'atterrissage résultant d'au moins une commande de direction fournie via un composant de contrôle d'avion.

3. Système de transfert selon la revendication 2, comprenant en outre un ou plusieurs élément(s) mobile(s) couplant le module de transfert à l'élément structurel (79).

4. Système de transfert selon la revendication 3, comprenant en outre un ou plusieurs absorbeur(s) de chocs (77), dans lequel l'élément structurel (79) est couplé au module de transfert via des absorbeurs de chocs reliés aux éléments mobiles.

5. Système de transfert selon l'une quelconque des revendications 1 à 4, dans lequel au moins une commande est adaptée pour le contrôle de la vitesse et/ou pour l'accélération du système de transfert.

6. Système de transfert selon l'une quelconque des revendications 1 à 5, comprenant en outre un capteur (76) adapté pour détecter un mouvement induit de contrôle de direction d'un train d'atterrissage (20) de l'avion, et en réponse, pour fournir le signal de transfert à la commande (72).

7. Système de transfert selon la revendication 6, dans lequel la commande (72) est adaptée pour recevoir des signaux de contrôle de direction de glissement et des signaux de contrôle de vitesse , et en réponse, pour commander le module de transfert, dans lequel le système de transfert est adapté pour maintenir un alignement entre le système de transfert d'avions non habité (100) et l'avion (10) pendant les mouvements de rotation de l'avion.

8. Système de transfert selon l'une quelconque des revendications 1 à 7, dans lequel le module de transfert comprend des roues multiples commandées indépendamment (71, 110, 11, 112, 113, 114).

9. Système de transfert selon l'une quelconque des revendications 1 à 8, comprenant en outre une interface audio adaptée pour recevoir des signaux modulés représentatifs d'une ou plusieurs commande(s) fournie(s) via un composant de contrôle d'avion, et en réponse, pour fournir le signal de transfert à la commande.

10. Système de transfert selon l'une quelconque des revendications 1 à 9, comprenant en outre des capteurs de situation couplés à la commande, sachant que la commande est en outre adaptée pour permettre la commande de transférer l'avion en réponse à une situation du système.

11. Procédé de transfert d'un avion, le procédé comprend:
a) la réception d'un signal de transfert en réponse à une ou plusieurs commande(s) fournie(s) via un composant de contrôle d'avion, et
b) en réponse au signal de transfert, le transfert de l'avion par un système de transfert d'avion non habité qui comprend au moins un moteur,
dans lequel les commandes sont à priori capables de commander l'avion et/ou des parties de celui-ci.

12. Procédé selon la revendication 11, dans lequel le signal de transfert répond à un mouvement induit de direction d'un support de train d'atterrissage, le mouvement résultant d'au moins une commande de direction fournie via un composant de contrôle d'avion ; dans lequel le support de train d'atterrissage met fermement en prise un train d'atterrissage de l'avion, et est couplé, de manière à pouvoir pivoter, à un élément structurel d'un système de transfert non habité.

13. Procédé selon la revendication 11 ou 12, comprenant en outre de décharger de l'énergie résultant d'un changement rapide d'une vitesse de l'avion.

14. Procédé selon l'une quelconque des revendications 11 à 13, dans lequel au moins une commande est adaptée pour le contrôle de la vitesse et/ou pour l'accélération du système de transfert.

15. Procédé selon l'une quelconque des revendications 11 à 14, comprenant en outre de détecter le mouvement induit de direction du train d'atterrissage de l'avion et en réponse, de fournir le signal de transfert.

16. Procédé selon la revendication 15, dans lequel le signal de transfert répond au mouvement induit de direction détecté et à une ou plusieurs commande(s) de contrôle de la vitesse, et le transfert de l'avion est effectué en appliquant la direction de glissement et en maintenant un alignement entre le système de transfert d'avions non habité et l'avion pendant les mouvements de rotation de l'avion.

17. Procédé selon l'une quelconque des revendications 11 à 16, comprenant en outre de déterminer une situation de l'avion, dans lequel le transfert de l'avion répond à la situation détectée.

18. Procédé selon l'une quelconque des revendications 11 à 17, comprenant en outre de détecter un obstacle et de fournir une indication d'obstacle et/ou de modifier une trajectoire du système de transfert.
